Europäisches Patentamt

European Patent Office

Office européen des brevets

(11) Publication number: **0 186 918 B1**

(12) # EUROPEAN PATENT SPECIFICATION

(45) Date of publication of patent specification: **08.05.91**  (51) Int. Cl.⁵: **C08F  6/08**, C08F 8/04,
C08C 2/04, C08C 19/02

(21) Application number: **85201765.6**

(22) Date of filing: **30.10.85**

Divisional application 89202914.1 filed on
30/10/85.

(54) Separating heavy metals from polymers.

(30) Priority: **23.11.84 US 673979**
**23.11.84 US 673978**

(43) Date of publication of application:
**09.07.86 Bulletin  86/28**

(45) Publication of the grant of the patent:
**08.05.91 Bulletin  91/19**

(84) Designated Contracting States:
**BE DE FR GB IT NL**

(56) References cited:
**GB-A- 788 967**
**US-A- 4 028 485**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Hoxmeier, Ronald James**
**2823 Waypark Drive**
**Houston, TX 77082(US)**

(74) Representative: **Aalbers, Onno et al**
**P.O. Box 302**
**NL-2501 CH The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The invention relates to a method for the removal of metal catalyst residues from water-insoluble polymer solutions contaminated with one or more of such residues.

The hydrogenation of unsaturated polymers is well known. Usually a solution of the polymer in an inert solvent is contacted at elevated temperature with hydrogen under pressure in the presence of a heavy metal catalyst which usually comprises at least one transition metal catalyst comprising nickel, cobalt or iron, with or without aluminium or lithium. Specific techniques may be found in British Patent Specification 1,020,720.

Unsaturated polymers are hydrogenated for a variety of reasons. The presence of olefinic double bonds in the polymers makes them susceptible to oxygen attack and to deterioration by actinic radiation; saturation of olefinic double bonds greatly improves environmental stability. Hydrogenation may improve colour. Polyethylene has been produced by hydrogenation of elastomeric polybutadiene (Ind. and Eng. Chem. 45, 1117-22 (1953), and Rubber Chem. and Tech. 35, 1052 (1962). In certain block copolymers or homopolymers resistance to flow under stress when hot is improved by hydrogenating the aromatic rings to alicyclic rings. In other block copolymers made solely from dienes, good thermoplastic elastomers can be produced by hydrogenating all of the olefinic double bonds.

A common problem shared by all of these types of hydrogenated polymers is the deleterious effect of the small amounts of metal catalyst residues remaining after hydrogenation. The quantity of metal to be removed may be as high as 50,000 parts per million (ppm). The metal causes polymer deterioration by promoting reactions with air and actinic radiation, and must therefore be removed almost completely, e.g. to less than about 10 ppm, although higher limits may be adequate for some purposes. Filtration may be carried out first to remove much of the catalyst, but residual contamination is very difficult to remove by purely physical separation; chemical reaction and then separation are required.

After the hydrogenation reaction to saturate the double bonds in the polymer, metal catalyst residues remain and vigorous reaction, sometimes at elevated temperatures and for extended time, is required to dissolve them. Strong acids such as hydrochloric acid and sulphuric acid have been used in the past, but such mixtures are very corrosive and may have a deleterious effect on equipment used and on the hydrogenated polymer from which the metals are being removed.

U.S. patent specification 3,780,138 discloses a process which incorporates extraction with dilute citric acid. The method requires large volumes of extractant, relatively long extraction times and phase separation is not sharp. Currently practised catalyst removal systems use an aqueous acid extraction system with 0.3-1% $H_2SO_4$. The acid stream volumes are of comparable size to the polymer cement streams.

In a typical polymer synthesis, lithium salts of living polymer anion chains are terminated (quenched) with alcohol in the polymerization section at the conclusion of the polymerization reaction. This polymer cement, containing lithium alkoxides, is then moved downstream to the hydrogenation section where it is contacted with $H_2$ and a Ni catalyst. The Ni catalyst is manufactured from Ni carboxylate salts and triethylaluminium. At the completion of the hydrogenation reaction, the polymer cement, containing catalyst, is sent to the catalyst extraction section where the Ni and Al are removed by contacting with, for example, dilute $H_3PO_4$ or dilute $H_2SO_4$. After phase separating the organic and aqueous streams, the polymer cement is forward to a finishing section. The aqueous stream can be sent to the effluent plant for metals recovery, for example, by precipitation, and for bio-treating to decompose entrained and dissolved organic material. The recovered metal-containing sludge is usually disposed of, for example, by trucking to a landfill.

British patent specification No. 788,967 discloses a method of decolourizing a hydrogenated off-colour homopolymer of butadiene or a butadiene/styrene copolymer, comprising contacting said polymer with a saturated organic mono- or polycarboxylic acid containing 2 to 8 carbon atoms or with a mineral acid.

More particularly the nickel catalyst used for hydrogenation of the polymer to be decolourized thereafter, is a nickel kieselguhr catalyst.

However in page 2, lines 68-70 it has been indicated that formic acid could not be satisfactorily used in colour removal whereas in page 2, lines 113-116, there is indicated that analysis of the polymer before and after decolourization shows the same nickel content and thus the reaction is not one of removal of the metal.

U.S. patent No. 4,028,485 discloses a process for the removal of hydrogenation catalyst, wherein said hydrogenation catalyst was formed by mixing an alkylaluminium or an alkyllithium compound containing 1-8 carbon atoms and nickel salts of organic acids containing 2 to 12 carbon atoms, from a solution containing said hydrogenation catalyst and from 1 to 50% by weight of a hydrogenated olefinic polymer in a hydrocarbon solvent.

2

Said process comprising contacting said solution with a non-aqueous organic acid is followed by neutralization with anhydrous base and filtration of said solution, thereby removing said hydrogenation catalyst residue. The anhydrous base used during this process is selected from anhydrous NaOH, KOH, $NH_3$, CaO, BaO, $K_2CO_3$, $Na_2CO_3$ and mixtures of NaOH and CaO.

A disadvantage of this process is that it has to be carried out under anhydrous conditions and that it comprises an additional neutralization step with an anhydrous base.

It is an object of this invention to provide an improved method of separating metal catalyst contaminant from organic polymers. It is also an object of this invention to provide an improved method for removing metal catalyst contaminants from organic polymers by a method in which the polymer is treated with concentrated solution of organic acid.

Accordingly, the invention provides a process for the removal of finely divided iron, nickel, cobalt lithium and/or aluminium metal catalyst residues from water-insoluble polymer solutions contaminated with one or more such residues with an organic acid, characterized in that the process comprises the steps of

(a) treating said solutions of the polymer in a water immiscible solvent with an aqueous solution of an organic acid, containing in the range of from 40 to 99% by weight of the acid, said acid solution being present at an acid to product solution volume ratio of between 1:1 and 1:40,

(b) separating the resulting acid solution phase from the polymer.

It will be appreciated that according to this process a relatively concentrated organic acid phase is used at very low acid organic phase ratios. Phase separations in these experiments are very sharp unlike aqueous acid systems. It is believed that the effectiveness of these acids can be attributed to partial solubility in the organic stream (phase transfer agents), lower surface tension of organic acid droplets compared to aqueous acids, higher density for promotion of phase separation (1.25 g/ml for formic acid), and enhanced solubility of the catalyst even before oxidation in these organic acids compared to aqueous systems. At very low acid/organic phase ratios, the organic phase is the continuous phase which is also known to enhance extraction rates. These extraction are essentially complete in less than a minute with only relatively gentle mixing.

The process of the present invention would have several advantages over the method used commercially at present. The acid extractant stream volume with the present invention could be about 1/10 the size of the same stream using the conventional dilute $H_2SO_4$. With a rapid single step extraction, most of the extraction unit facilities could be eliminated, e.g., extraction vessels and phase separators. With modes mixing requirements, it may be possible to substitute static mixers for mechanical mixers in existing facilities. Cheaper metals, e.g., 316 or 304 stainless steel could be used for the extraction vessels and phase separators in the downsized and simplified facility and would represent a substantial capital savings. Moreover the use of anhydrous conditions and an additional neutralization step with anhydrous bases can be eliminated.

In selecting a suitable agent to remove metallic residues from the hydrogenated polymers, a complex and interrelated set of criteria should be considered as desirable: The agent chosen should be substantially inert toward the polymer and polymer solvent; it should be capable of forming a stable water-soluble complex with iron (often present as a contaminant from equipment or water); capable of forming a stable water-soluble complex with nickel or cobalt and aluminium (present as hydrogenation catalyst residues over a wide pH range); preferably when lithium initiated polymers are concerned, it should be capable of complexing with any lithium residues which may remain after forming the original polymers. Agents which fail to satisfy any one of the above criteria may be regarded as unsatisfactory for the present purpose.

Preferred organic acids for this process are formic acid and acetic acid. The acid used is preferably concentrated typically 70-98% by weight. The most effective extraction occurs with the most concentrated acids.

More particularly, there is provided a method of treating a nickel-contaminated water-insoluble product made by hydrogenating an unsaturated polymer of the group consisting of conjugated diene homopolymers and copolymer of conjugated dienes and vinylarenes containing a catalyst prepared from a salt or chelate of nickel reduced with an aluminium compound.

The process of this invention may also be applied to organic polymers that are not necessarily products from hydrogenation, but which contain metal contaminants. Such a polymer may be contaminated incidentally with metal, such as iron or nickel, produced by reducing a metal compound, as with an aluminium-alkyl compound.

The various components of the hydrogenation product and the agents used in the metal removal treatment will now be described:

Among the unsaturated polymers that may be hydrogenated to products suitable for treatment by the process of this invention are homopolymers made from open chain conjugated dienes having from 4 to 8 carbon atoms per molecule, preferably 4 to 6 carbon atoms per molecule, various types (e.g., blocks or random) of copolymers of these conjugated dienes with vinylarenes, and homopolymers of vinylarenes.

The homopolymers, random copolymers and block copolymers can be made by processes well known to the art. Free radical polymerization of unsaturated hydrocarbon monomers is discussed at length in Whitby's book "Synthetic Rubber" and in hundreds of patent specifications and scientific papers. Block copolymers are the subject of many patent specifications and numerous scientific papers. References that describe polymerization techniques for block polymers are U.S. patent specifications 3,231,635; 3,301,840; 3,465,063; and 3,281,383. The term "vinylarene" as used herein is intended to include styrene, ring substituted styrenes and species having alkyl substituents on the vinyl group in the alpha position, such as alpha-methylstyrene.

These unsaturated polymers may be hydrogenated partially, or selectively, or completely by techniques known to the art, using finely divided metals as catalyst and hydrogen under pressure and elevated temperature. The catalyst may be, for example, Raney nickel, finely divided cobalt, and the like. It will be understood that it is not important to this invention how the metal catalyst was made. With these catalysts hydrogenation may be partial or complete, in the sense that all or part of the double bonds in the unsaturated polymers are saturated.

A particularly useful type of metal catalyst is made by reducing a metal compound or chelate of cobalt or nickel, with an aluminium-containing reducing agent. An example is a reaction product of nickel acetate with triethylaluminium. Nickel and cobalt salts of alkanoic acids with from 1 to 12 carbon atoms in the alkanoate moiety are particularly suitable, as are nickel chelates, such as nickel acetylacetonate. Dicobalt octacarbonyl, cobalt acetate, cobalt hydroxide and cobalt salts of alkanoic acids all produce essentially the same results. Organometallic reducing agents may be aluminium compounds, especially hydrocarbyls such as aluminiumtriethyl, alumiumtriisobutyl, aluminiumtriphenyl and the like. Lithium aluminium hydride, aluminium hydride and aluminium powder may also be used as reducing agents.

These catalysts permit selective hydrogenation of copolymers as disclosed in detail in U.S. patent specification 3,595,942.

Suitable precursor polymers include linear and branched configurations having individual polymer blocks, such as polybutadiene, polyisoprene, polystyrene or polyalpha-methylstyrene. Typical species include polystyrene-polyisoprene, polystyrene-polybutadiene-polystyrene and poly(alpha-methylstyrene)-polyisoprene-poly(alpha-methylstyrene).

Typical completely hydrogenated polymers containing metal catalysts that benefit from the method of this invention are hydrogenated polybutadiene, hydrogenated polyisoprene, completely hydrogenated polystyrene, completely hydrogenated random styrene-butadiene copolymers, completely hydrogenated vinylarene-diene block copolymers, described in U.S patent specifications 3,333,024 and 3,431, 323, and completely hydrogenated all-diene block copolymers, described in U.S. patent specification 3,465,063. Suitable hydrogenation conditions and catalysts are described in Canadian patent specification 815,575.

Hydrogenation may be conducted under the usual conditions known in the art, as described especially in U.S. patent specification 3,595,942 and British patent specification 1,020,720.

When hydrogenation is finished, the metal catalyst residue is insoluble in the water-immiscible inert solvent, usually a hydrocarbon, used for the hydrogenation. The hydrogenated polymer may be in solution, or it may be partially precipitated if the polymer structure is such that it partially crystallizes; for example, a hydrogenated polystyrene-polyisoprene-polystyrene is soluble in a cyclohexane hydrogenation solvent, but the hydrogenated cis-1,4-polybutadiene is a crystalline polyethylene that may be only partly soluble at room temperature. Aliphatic, cycloaliphatic and aromatic solvents may be used. Cyclohexane is a preferred solvent.

In the process of this invention now to be described (steps a and b) the metal catalyst residue in the product is dissolved in an aqueous concentrated solution of organic acid. The metal atoms are believed to be converted to metal ions that become part of a water soluble complex ion. Water soluble alcohols that may optionally be present in the aqueous acid phase also assist in metal removal.

Optionally, the separated organic acid solution is regenerated by addition of oxalic acid. Suitably, one mol of oxalic acid is added per mol of metals present. The precipitate thus formed is suitably removed from the resulting acid phase by means of filtration. The filtered acid phase may be recycled to step (a).

Phase ratios between the organic acid and hydrocarbon polymer phase can be 1:1 to 1:40, preferably 1:10 to 1:25, with an optimum at about 1:20 for formic acid/cyclohexane phases. Preferred ratios may be affected by the polymer being extracted and its concentration in the hydrocarbon phase, the amounts of contaminating metals to be removed, and economics.

The water soluble alcohol present as an optional component in an amount of 1-20% by weight of the aqueous phase containing the complexing acid may be an aliphatic monohydric alcohol containing preferably not more than 8 carbon atoms per molecule.

Methanol, 2-propanol and ethanol are preferred alcohols. It is necessary that the alcohol used be soluble in water to the extent of at least 1% by weight.

Treatment of the product in step (a) involves intimate mixing of the two immiscible phases by any of the known techniques.

Phase separation in step (b) to remove the acid solution containing the contaminating metal ions can be done by any of several means known to the art. The multiphase system may be placed in a settling tank, or it may be centrifuged or it may be run through a tower containing coalescing fibrous material with a layer separation tank at the bottom, or by other means.

The process of this invention (steps a, b) may be conducted at temperatures from about 5 °C to 200 °C and at pressures from 0.1 bar to 20 bar. Preferred temperatures are from 10 °C to 200 °C and preferred pressures are from 0.5 bar to 5 bar. Contact times will range from 0.01 h to 10 h in the treating steps and from 0.01 to 14 h in the phase separation step, but preferred contact times are 0.02 h to 1 h in the treating step and 0.02 to 1 h in the phase separation step.

The following examples further illustrate the invention.

## EXAMPLES 1-9 AND COMPARATIVE EXPERIMENTS A-C

Experiments were conducted to show the effect of acid concentrations on extraction efficiency. To 50 ml of cyclohexane containing 320 parts per million (ppm) Ni (added as conventional Ni/Al hydrogenation catalyst) was added 10 ml of formic acid (volume ratio cyclohexane to acid 5:1). After acid addition, the mixture was hand-shaken gently for 30 seconds. The catalyst colour (black) was noted to quickly invert to the formic acid phase (brown) upon shaking. After shaking, the mixture was allowed to phase separate for 10 minutes. The extraction was carried out at ambient temperature. After settling, Ni analyses were performed on both the cyclohexane and formic acid phases by atomic absorption. Over a period of time (several hours), the brown catalyst colour in the formic acid phase was observed to fade to colourness. This is probably the result of slow oxidation of $Ni^0$ to $Ni^{+2}$. The results are given in Table I.

### TABLE I

| Example | %wt $HCO_2H$ in $H_2O$ | Nickel content (ppm) of acid phase | Nickel content (ppm) of cyclohexane phase | Extraction Efficiency (%) | Comments |
|---|---|---|---|---|---|
| 1 | 88 | 906 | 4.5 | 98.6 | Excellent |
| 2 | 75 | 1072 | 7.4 | 97.7 | Good |
| 3 | 50 | 1018 | 9.9 | 96.9 | Fair |
| Comp. Experiment | | | | | |
| A | 25 | 599 | 73 | 77.1 | Poor |
| B | 10 | 347 | 106 | 66.7 | Poor |

Table II shows the extraction efficiency of 75% formic acid at various phase ratios and of 80% acetic acid. 0.3% sulphuric acid at a phase ratio of 5:4 was included as a control. The data show that for 75% formic acid phase ratios of 1:10 to 1:20 are optimum with the 1:20 acid/hydrocarbon system appearing to give the best phase separation.

## TABLE II

| Example | %wt HCO₂H in H₂O | Volume ratio cyclohexane to acid | Nickel content (ppm) of acid phase | cyclohexane phase | Extraction Efficiency (%) | Comments |
|---|---|---|---|---|---|---|
| 4 | 75 | 5:1 | 1072 | 7.4 | 97.7 | Good |
| 5 | 75 | 10.:1 | 1541 | 5.6 | 98.2 | Excellent |
| 6 | 75 | 13:1 | 1929 | 5.9 | 98.3 | Excellent |
| 7 | 75 | 20:1 | 2945 | 5.0 | 98.4 | Excellent[1] |
| 8 | 75 | 40:1 | 5180 | 17.0 | 94.7 | Fair |
| 9 | 80% Acetic | 5:1 | 1462[3] | 1.2 | 99.6 | Superior |
| Comp. Experiment | | | | | | |
| C | 0.3% H₂SO₄ | 5:4 | 380 | 25.0 | 92.2 | Poor[2] |

1. Best settling system (enhanced phase separation).
2. Phase separation is poor. Cyclohexane phase is still black - HCO₂H/acetic acid extractions give water white organic phase.
3. One mol of oxalic acid/mol (Ni + Al) was added to this solution giving an easily filtered metal oxalate precipitate. Residual Ni in the acetic acid after precipitation was <30 ppm (>98% removal). This acetic acid supernatant could be recycled back to the catalyst extraction step.

Results show that all of the formic acid ratios tried performed significantly better than the 0.3% H₂SO₄ control which is the current industry standard extraction system. The 80% acetic acid system with added oxalic acid performed best and produced a recyclable acid supernatant.

## Claims

1. A process for the removal of finely divided iron, nickel, cobalt, lithium and/or aluminium catalyst residues from water insoluble polymer solutions contaminated with one or more such residues with an organic acid, characterized in that the process comprises the steps of:
   (a) treating said solutions of the polymer in a water-immiscible solvent with an aqueous solution of an organic acid, containing in the range of from 40 to 99% by weight of the acid, said acid solution being present at an acid to product solution volume ratio of between 1:1 and 1:40,

(b) separating the resulting acid solution phase from the polymer.

2. Process as claimed in claim 1, characterized in that a nickel containing hydrogenation catalyst, prepared from a salt or chelate of nickel, reduced with aluminium compound, is removed.

3. Process according to any one of claims 1-2, characterized in that the acid solution has a concentration of 70-98% by weight.

4. Process according to any one of the claims 1-3, characterized in that the volume ratios between the organic acid phase and polymer phase is from 1:10 to 1:25.

5. Process according to any one of the claims 1-4, characterized in that cyclohexane is used as solvent.

6. Process according to any one of claims 1 to 5, characterized in that as organic acid formic acid is used.

7. Process according to claim 5, characterized in that a volume ratio between the organic acid phase and polymer phase is 1:20 for formic acid/cyclohexane phases.

8. Process according to any one of claims 1 to 5, characterized in that as organic acid acetic acid is used.

9. Process according to any one of the claims 1-8, characterized in that an aliphatic monohydric alcohol, soluble in water to the extent of at least 1% by weight and containing not more than 8 carbon atoms in the molecule, is present in the aqueous acid phase.

10. Process according to claim 9, characterized in that the water soluble alcohol is present in an amount of 1-20% by weight of the aqueous acid phase.

11. Process according to claims 9-10, characterized in that methanol, 2-propanol or ethanol is used.

12. Process according to any one of the claims 1-11, characterized in that the separated organic acid phase is regenerated by addition of oxalic acid, removal of the formed precipitate by filtration and recycling the filtered acid phase to step (a).


**Revendications**

1. Procédé d'élimination de résidus de catalyseur finement divisés à base de fer, de nickel, de cobalt, de lithium et/ou d'aluminium, à partir de solutions de polymère insoluble dans l'eau, souillées avec un ou plusieurs de ces résidus, à l'aide d'un acide organique, caractérisé en ce qu'il comprend les étapes consistant :

(a) à traiter ces solutions du polymère dans un solvant immiscible dans l'eau, avec une solution aqueuse d'un acide organique, contenant de 40 à 99 % en poids de l'acide, cette solution acide étant présente selon un rapport volumique de l'acide à la solution de produit, de 1:1 à 1:40,

(b) à séparer la phase à base de solution acide résultante, du polymère.

2. Procédé selon la revendication 1, caractérisé en ce qu'on élimine un catalyseur d'hydrogénation contenant du nickel, préparé à partir d'un sel ou d'un chélate de nickel, réduit avec un composé dérivé de l'aluminium.

3. Procédé selon l'une quelconque des revendications 1 et 2, caractérisé en ce que la solution acide, a une concentration de 70 à 98 % en poids.

4. Procédé selon l'une quelconque des revendications 1 à 3, caractérisé en ce que les rapports volumiques de la phase acide organique à la phase à base de polymère, varient de 1:10 à 1:25.

5. Procédé selon l'une quelconque des revendications 1 à 4, caractérisé en ce que l'on emploie du cyclohexane comme solvant.

6. Procédé selon l'une quelconque des revendications 1 à 5, caractérisé en ce que l'on emploie de l'acide formique comme acide organique.

7. Procédé selon la revendication 5, caractérisé en ce que le rapport volumique de la phase acide organique à la phase à base de polymère est de 1:20 dans le cas de phases à base d'acide formique et de cyclohexane.

8. Procédé selon l'une quelconque des revendications 1 à 5, caractérisé en ce que l'on emploie de l'acide acétique comme acide organique.

9. Procédé selon l'une quelconque des revendications 1 à 8, caractérisé en ce qu'un monoalcool aliphatique soluble dans l'eau à raison d'au moins 1 % en poids et ne contenant pas plus de 8 atomes de carbone dans la molécule, est présent dans la phase aqueuse acide.

10. Procédé selon la revendication 9, caractérisé en ce que l'alcool soluble dans l'eau est présent selon une quantité de 1 à 20 % en poids par rapport à la phase acide aqueuse.

11. Procédé selon les revendications 9 et 10, caractérisé en ce que l'on emploie du méthanol, du 2-propanol ou de l'éthanol.

12. Procédé selon l'une quelconque des revendications 1 à 11, caractérisé en ce que la phase acide organique séparée, est régénérée par addition d'acide oxalique, élimination par filtration du précipité formé, et recyclage de la phase acide filtrée dans l'étape (a).


**Ansprüche**

1. Verfahren zur Entfernung von feinteiligen Eisen-, Nickel-, Cobalt-, Lithium und/oder Aluminium-Katalysatorrückständen aus wasserunlöslichen Polymerlösungen, die mit einem oder mehreren dieser Rückstände verunreinigt sind, mit einer organischen Säure, dadurch gekennzeichnet, daß das Verfahren die Stufen umfaßt:
   (a) Behandlung dieser Lösung des Polymers in einem mit Wasser nicht mischbaren Lösungsmittel mit einer wäßrigen Lösung einer organischen Säure, enthaltend 40 bis 99 Gew.-% der Säure, wobei die Säurelösung in einem Volumenverhältnis Säure zu Produktlösung zwischen 1:1 und 1:40 vorhanden ist,
   (b) Abtrennung der erhaltenen sauren Lösungsphase von dem Polymer.

2. Verfahren nach Anspruch 1, dadurch gekennzeichnet, daß ein nickelhaltiger Hydrierungskatalysator, der hergestellt worden ist aus einem Salz oder Chelat von Nickel, reduziert mit einer Aluminiumverbindung, entfernt wird.

3. Verfahren nach einem der Ansprüche 1 bis 2, dadurch gekennzeichnet, daß die saure Lösung eine Konzentration von 70 bis 98 Gew.-% besitzt.

4. Verfahren nach einem der Ansprüche 1 bis 3, dadurch gekennzeichnet, daß das Volumenverhältnis zwischen der organischen Säurephase und der Polymerphase 1:10 bis 1:25 beträgt.

5. Verfahren nach einem der Ansprüche 1 bis 4, dadurch gekennzeichnet, daß Cyclohexan als Lösungsmittel angewandt wird.

6. Verfahren nach einem der Ansprüche 1 bis 5, dadurch gekennzeichnet, daß als organische Säure Ameisensäure angewandt wird.

7. Verfahren nach Anspruch 5, dadurch gekennzeichnet, daß das Volumenverhältnis zwischen der organischen Säurephase und der Polymerphase 1:20 für Ameisensäure Cyclohexan-Phasen beträgt.

8. Verfahren nach einem der Ansprüche 1 bis 5, dadurch gekennzeichnet, daß als organische Säure Essigsäure verwendet wird.

9. Verfahren nach einem der Ansprüche 1 bis 8, dadurch gekennzeichnet, daß ein aliphatischer einwertiger Alkohol, der in Wasser zumindest zu 1 Gew.-% löslich ist und nicht mehr als 8 Kohlenstoffatome im Molekül enthält, in der wäßrigen Säurephase vorhanden ist.

10. Verfahren nach Anspruch 9, dadurch gekennzeichnet, daß der in Wasser lösliche Alkohol in einer Menge von 1 bis 20 Gew.-%, bezogen auf die wäßrige Säurephase, vorhanden ist.

11. Verfahren nach den Ansprüchen 9 bis 10, dadurch gekennzeichnet, daß Methanol, 2-Propanol oder Ethanol verwendet wird.

12. Verfahren nach einem der Ansprüche 1 bis 11, dadurch gekennzeichnet, daß die abgetrennte organische Säurephase regeneriert wird durch Zugabe von Oxalsäure, Entfernung des entstandenen Niederschlags durch Filtration und Rückführung der filtrierten Säurephase in Stufe (a).